# EUROPÄISCHE PATENTSCHRIFT

(11) **EP 1 029 602 B1**
(45) Veröffentlichungstag und Bekanntmachung des Hinweises auf die Patenterteilung: **07.05.2003**
(21) Anmeldenummer: 00102189.8
(22) Anmeldetag: 09.02.2000
(51) Int. Cl.: B08B 7/00, B23K 26/00, B62D 25/00

(54) **Verfahren zum Entfernen von Klebemitteln von einer Oberfläche eines Fahrzeugkarrosseriebauteils**
Process for removing adhesives from the surface of a part of a vehicle body
Procédé pour enlever des adhésifs de la surface d'une pièce de carrosserie de véhicule

(30) Priorität: 21.05.1999 DE 19923495; 17.02.1999 DE 19906761
(43) Veröffentlichungstag der Anmeldung: 23.08.2000
(73) Patentinhaber: Volkswagen Aktiengesellschaft, 38436 Wolfsburg (DE)
(72) Erfinder: Krumrey, Dieter, 38457 Calberlah (DE); Parr, Michael, 38114 Braunschweig (DE); Müller-Rogait, Jochen, 38446 Wolfsburg (DE)

(56) Entgegenhaltungen:
- EP-A- 0 058 307
- WO-A-96/17737
- DE-A- 4 000 754
- US-A- 5 662 762
- PATENT ABSTRACTS OF JAPAN vol. 017, no. 518 (E-1434), 17. September 1993 (1993-09-17) -& JP 05 136569 A (MITSUBISHI ELECTRIC CORP), 1. Juni 1993 (1993-06-01)
- PATENT ABSTRACTS OF JAPAN vol. 017, no. 273 (P-1545), 26. Mai 1993 (1993-05-26) -& JP 05 011120 A (NEC CORP), 19. Januar 1993 (1993-01-19)
- PATENT ABSTRACTS OF JAPAN vol. 33 (M-638), 4. November 1987 (1987-11-04) & JP 62 118991 A (NEC CORP), 30. Mai 1987 (1987-05-30)
- PATENT ABSTRACTS OF JAPAN vol. 017, no. 039 (E-1311), 25. Januar 1993 (1993-01-25) & JP 04 257240 A (SHARP CORP), 11. September 1992 (1992-09-11)
- PATENT ABSTRACTS OF JAPAN vol. 009, no. 088 (C-276), 17. April 1985 (1985-04-17) -& JP 59 221370 A (NITSUSAN SHIYATAI KK), 12. Dezember 1984 (1984-12-12)

## Beschreibung

Die Erfindung betrifft ein Verfahren zum Entfemen von Klebemitteln von einer Oberfläche eines Fahrzeugkarosseriebauteils mit den im Anspruch 1 genannten Merkmalen.

### Stand der Technik

Werden solide Werkstücke an ihrer Oberfläche, beispielsweise im Verlaufe eines Fertigungsverfahrens, mit einem Schmier- und/oder Klebemittel benetzt, so ist es häufig erforderlich, in einem bestimmten Bereich der Oberfläche des Werkstücks diese Mittel wieder zu entfernen. Bei herkömmlichen Verfahren wird dabei im Falle ausgehärteter Klebemittel oft auf mechanische Reinigungsverfahren zurückgegriffen, bei denen beispielsweise mittels einer Stahlbürste eine Schicht des Klebemittels in dem vorgegebenen Bereich entfernt wird. Besitzen die Schmier- und/oder Klebemittel noch eine eher gelartige Konsistenz, so kann eine Reinigung mit Hilfe geeigneter Lösungsmittel erfolgen, wobei häufig manuell mit einem lösungsmittelgetränkten Lappen der zu reinigende Bereich der Oberfläche abgewischt wird. Nachteilig bei diesen Verfahren sind zum einen die häufig dem Werkstück weiterhin anhaftenden Reinigungsrückstände, wie Lösungsmittel, Stäube oder dergleichen. Zum anderen stellen die auftretenden Stäube oder die verwendeten Lösungsmittel oft ein erhebliches Gefährdungspotential dar, da sie beim Einatmen oder bei Hautkontakt gesundheitsgefährdend sein können. Es sind zur Abhilfe Verfahren bekannt, bei denen mittels eines Lasers unerwünschte Beschichtungen des Werkstückes entfernt werden (siehe beispielsweise den Prospekt der Firma SLCR Lasertechnik vom 24.11.1998 und die Schrift DE-OS 41 17 263). Diese Verfahren finden bisher lediglich in speziellen Problemstellungen Anwendung, so beispielsweise zur Entschichtung von Luftfahrzeugkomponenten, Entfettung längsgeschweißter Metallrohre, oder zur präzisen Entfernung von Klebemitteln in Lichtleitfasern oder elektronischen Bauteilen.

Während der Fertigung einer Automobilkarosserie werden sehr häufig Verfahren verwendet, bei denen das Klebemittel dem kraftschlüssigen Fügen zweier Bauteile der Fahrzeugkarosserie dient. Insbesondere kann ein Außenblech einen Falzflansch ausbilden, der ein Innenblech formschlüssig umfaßt, wobei zwischen dem Innenblech und dem Außenblech das Klebemittel aufgebracht wird. Dazu muß das Außenblech in einem ersten Arbeitsschritt in einem Bereich, der später den Falzflansch ausbilden soll, mit dem Klebemittel benetzt werden. In einem zweiten Arbeitsschritt wird dann das Innenblech in geeigneter Weise in diesem Falzflanschbereich positioniert. In weiter folgenden Arbeitsschritten wird das Außenblech über das Innenblech gebogen und gelegt, so daß das Innenblech mit dem Außenblech flächig verbunden ist. Infolge der mechanischen Belastung wird dabei überschüssiges Klebemittel aus dem Falzflansch herausgedrückt. Gängige Klebemittel, insbesondere Epoxidharze, müssen anschließend zur Aushärtung thermisch behandelt werden.

Das Entfernen des Klebemittels in dem Bereich oberhalb des Falzflansches wird bei dem bekannten Verfahren entweder durch das Abwischen mit einem lösungsmittelgetränkten Lappen oder durch mechanische Bearbeitung erreicht. Aus der EP-A-0 058 307 ist bekannt, das Klebemittel durch ein tiefkaltes verflüssigtes Gas vorübergehend zu verspröden and durch mechanische Einwirkung vom Werkstück abzusprengen. Neben den bereits erläuterten gesundheitlichen Risiken ergeben sich weitere Nachteile, die vor allem infolge neuer und erhöhter Anforderungen an die Festigkeit des Klebemittels auftreten. So kann es vorteilhaft sein, eine Steifigkeit der Fahrzeugkarosserie zu erhöhen, um erhöhten Crashanforderungen zu genügen. Daher ist vermehrt der Einsatz hochfester Klebemittel notwendig, die sich nach den bekannten Verfahren häufig nur noch teilweise oder gar nicht mehr entfernen lassen. Des weiteren ist nachteilig, daß es bei der mechanischen Reinigung zu einer Beschädigung der Oberfläche des Bauteils kommen kann. Werden Lösungsmittel eingesetzt, so kann infolge oxidativer oder korrosiver Prozesse auf der Oberfläche des Bauteils eine das Bauteil schützende Korrosionsschicht beschädigt werden.

### Vorteile der Erfindung

Dem vorliegenden Verfahren liegt die Aufgabe zugrunde, das Entfernen von Klebemitteln von der Oberfläche eines Fahrzeugkarosseriebauteils im Bereich des Falzflansches in einfacher Weise zu ermöglichen.

Erfindungsgemäß wird diese Aufgabe durch ein Verfahren mit den im Anspruch 1 genannten Merkmalen gelöst, wobei das Klebemittel in dem vorgebbaren Bereich durch einen Laser verdampft wird. Damit ist ein berührungsloses Entfernen möglich, so daß eine mechanische Beschädigung des Bauteils ausgeschlossen ist. Es können nun auch Klebemittel entfernt werden, die nach dem Aushärten eine extreme Festigkeit besitzen, ohne daß dabei die Oberfläche der Bauteile beschädigt wird. Weiterhin ist bevorzugt, während der Bestrahlung mittels des Lasers die entstehenden Dämpfe mit einer Absaugvorrichtung zu entfernen. Auf diese Weise können gesundheitsgefährdende Risiken weitestgehend minimiert werden. Weiterhin kann auf Lösungsmittel verzichtet werden, und es treten keine Reinigungsrückstände auf, die eine weitere Bearbeitung des Werkstückes stören.

Die Verwendung von Klebemitteln mit erhöhter Festigkeit birgt zudem die Vorteile, daß zum einen aufgrund einer erhöhten Dichtigkeit ein besserer Korrosionsschutz gewährbar ist. Zum anderen wird häufig vor einer Lackierung der Bauteile in dem Bereich des Falzflansches eine Feinabdichtung aufgetragen. Nach dem anschließenden Lackieren wird der Lack thermisch behandelt. Wenn nun in dem Klebemittel Luftblasen eingeschlossen sind, können diese während der thermischen Behandlung aufgrund der abnehmenden Viskosität in die Feinabdichtung wandern, wobei eine Oberfläche der Feinabdichtung aufrauht. Nach der Lackierung sind solche Luftblasen dann nicht nur optisch störend, sondern bieten auch einen Angriffspunkt korresiver Prozesse. Vorteilhaft ist nun, das Klebemittel erhöhter Festigkeit eingesetzt werden können, bei denen es nicht mehr zu einer Wanderung der Luftblasen infolge thermischer Belastung kommen kann.

Vorteilhaft ist ferner, daß die Behandlung mittels Laser nahtlos in einen Fertigungsablauf integriert werden kann. So ist es denkbar, das erfindungsgemäße Verfahren automatisiert ablaufen zu lassen, indem beispielsweise der Laser an einem Roboter angebracht ist. Auf diese Weise kann eine Fertigungszeit erheblich herabgesetzt werden, was zu wesentlich geringeren Stückkosten führt.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:

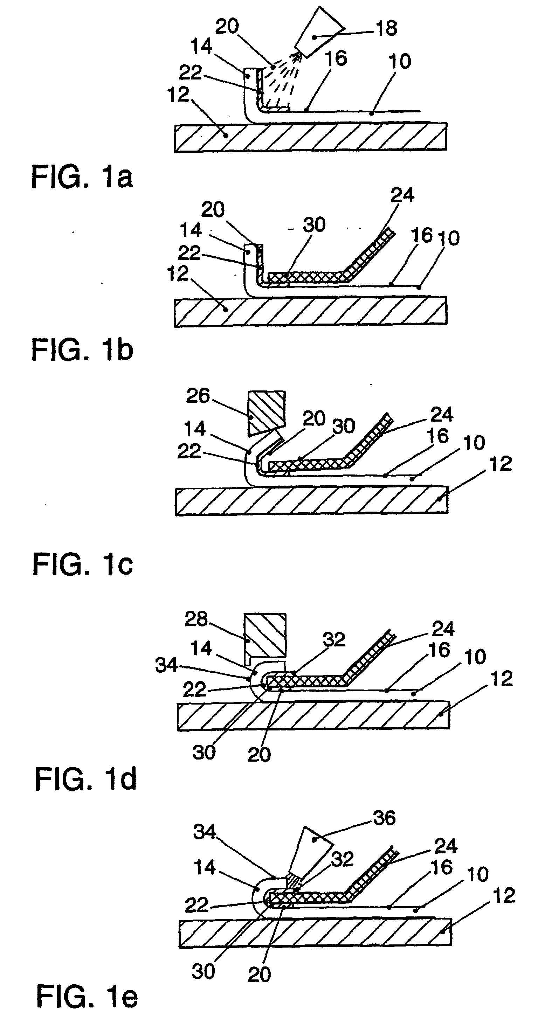

- Figuren 1a bis 1e: verschiedene Arbeitsschritte im Bereich eines Falzflansches während einer Fertigung einer Fahrzeugkarosserie.

### Beschreibung des Ausführungsbeispiels

In den Figuren 1a bis 1e ist der Ablauf von insgesamt fünf Arbeitsschritten während einer Fertigung eines Falzflansches 34 an einer Fahrzeugkarosserie dargestellt. Die einzelnen Figuren zeigen dabei schematische Schnittansichten eines hier nur exemplarisch herausgegriffenen Anwendungsbeispiels für das erfindungsgemäße Verfahren.

Die Figur 1a zeigt in schematischer Weise einen ersten Arbeitsschritt beim Falzen, das heißt kraftschlüssigen Fügen, zweier Bauteile. Auf einer Werkbank 12 ist dazu ein Außenblech 10 in einer vorgebbaren Lage fixiert. In einem Bereich 14, der später den Falzflansch 34 ausbilden soll, weist das Blech 10 einen Winkel auf. Der Winkel ist im vorliegenden Beispiel derart gewählt, daß das Außenblech 10 zunächst parallel zur Werkbank 12 verläuft, um dann in eine Senkrechte überzugehen. Während des ersten Arbeitsschrittes wird in dem Bereich 14 einer Oberfläche 16 des Außenbleches 10 mittels einer Düse 18 ein Klebemittel 20 als eine Schicht 22 aufgebracht.

In einem zweiten Arbeitsschritt wird dann ein Bereich 30 eines Innenbleches 24, der später innerhalb des Falzflansches 34 liegen soll, positioniert (Figur 1b). Innenblech 24 und Außenblech 10 können dabei aus verschiedenartigen Werkstoffen geformt sein. So können diese aus Stahlblech oder anderen Metallen bestehen, aber auch als mehrschichtige Verbundwerkstoffe, die beispielsweise durch Schweißen, Kleben oder dergleichen miteinander gefügt sind, eingesetzt werden.

Durch einen Falzbecher 26 (Figur 1c) und einen Stempel 28 (Figur 1d) wird in zwei anschließenden Arbeitsschritten das Außenblech 10 um das Innenblech 24 gelegt und gebogen, bis das Außenblech 10 flächig an dem Innenblech 24 anliegt. Zwischen dem Außenblech 10 und dem Innenblech 24 befindet sich dabei in dem Bereich des Falzflansches 34 die Schicht 22 des Klebemittels 20. Infolge der mechanischen Belastung wird überflüssiges Klebemittel 20 aus dem Falzflansch 34 gepreßt und befindet sich sodann in einem Bereich 32 oberhalb des Falzflansches 34. Zur Aushärtung des Klebemittels 20 wird dieses thermisch behandelt. Die Temperaturen einer solchen Behandlung liegen üblicherweise im Bereich von zirka 180 bis 200 °C und sind abhängig von der Beschaffenheit des eingesetzten Klebemittels. Als Klebemittel eignen sich insbesondere Epoxidharze oder Klebemittel mit einem hohen Epoxidharzanteil, da diese nach dem Aushärten eine besonders große Festigkeit besitzen.

Das Entfernen des überschüssigen Klebemittels 20 in dem Bereich 32 erfolgt durch Verdampfen mittels eines Lasers 36 (Figur 1e). Der Laser 36 kann dabei entweder durch einen geeigneten Automaten über den Bereich 32 geführt werden, oder die Fahrzeugkarosserie selbst wird in geeigneter Weise an einem stationären Laser 36 vorbeigeführt. Denkbar ist ferner, daß dieser Arbeitsschritt auch im Einzelfall manuell mit einem Handlaser durchgeführt wird.

Eine Arbeitswellenlänge des Lasers 36 ist dabei auf das Klebemittel 20 abgestimmt, so daß dieses infolge der übertragenen Energie verdampft. Die entstehenden Dämpfe können durch eine hier nicht dargestellte Absaugvorrichtung entfernt werden. Geeignete Lasertypen können beispielsweise Kohlendioxidlaser, Festkörperlaser, Diodenlaser oder dergleichen sein, wobei diese selbstverständlich in Abhängigkeit von dem zu behandelnden Klebemittel 20 gewählt werden müssen.

Ein nach den erläuterten Arbeitsschritten der Figuren 1a bis 1e gefertigter Falzflansch 34 kann nachfolgend direkt weiterverarbeitet werden, indem beispielsweise eine Feindichtung und ein Lack aufgebracht wird.

## Patentansprüche

1. Verfahren zum Entfernen von Klebemitteln von einer Oberfläche eines Fahrzeugkarosseriebauteils im Bereich eines Falzflansches, wobei der Falzflansch durch ein ein Innenblech umfassendes Außenblech gebildet wird, zwischen denen eine Schicht des Klebemittels aufgebracht ist, und der zu bearbeitende Bereich auf dem Innenblech oberhalb des Falzflansches liegt, wobei das Klebemittel in dem zu bearbeitenden Bereich durch einen Laser verdampft wird.

2. Verfahren nach Anspruch 1, **dadurch gekennzeichnet, daß** Klebemittel (20) mit einem hohen Epoxidharzanteil oder einem Epoxidharz verdampft werden.

3. Verfahren nach einem der vorhergehenden Ansprüche, **dadurch gekennzeichnet, daß** als Laser (36) ein Kohlendioxidlaser, ein Festkörperlaser, ein Diodenlaser oder dergleichen verwendet wird.

4. Verfahren nach Anspruch 3, **dadurch gekennzeichnet, daß** der Laser (36) in Abhängigkeit von dem zu entfernenden Klebemittel (20) gewählt wird.

5. Verfahren nach einem der vorhergehenden Ansprüche, **dadurch gekennzeichnet, daß** entstehende Dämpfe des Klebemittels durch eine Absaugvorrichtung abgesaugt werden.

6. Verfahren nach einem der vorhergehenden Ansprüche, **dadurch gekennzeichnet, daß** der Laser automatisch dem Bereich (32) angenähert wird.

7. Verfahren nach einem der Ansprüche 1 bis 5, **dadurch gekennzeichnet, daß** der Laser manuell dem Bereich (32) angenähert wird.

## Claims

1. Method for removal of adhesives from a surface of a vehicle body component in the region of a folding flange, the folding flange being formed by an outer panel surrounding an inner panel, between which panels a layer of adhesive is applied, and the region to be treated on the inner panel lying above the folding flange, adhesive being vapourized by means of a laser in the region to be treated.

2. Method according to Claim 1, **characterized in that** the adhesives (20) having a high epoxy resin fraction or having an epoxy resin are vapourized.

3. Method according to one of the preceding claims, **characterized in that** the laser (36) used is a carbon dioxide laser, a solid-state laser, a diode laser or the like.

4. Method according to Claim 3, **characterized in that** the laser (36) is selected as a function of the adhesive (20) to be removed.

5. Method according to one of the preceding claims, **characterized in that** vapours of the adhesive which arise are suction-extracted by means of a suction-extraction device.

6. Method according to one of the preceding claims, **characterized in that** the laser is moved near to the region (32) automatically.

7. Method according to one of Claims 1 to 5, **characterized in that** the laser is moved near to the region (32) manually.

## Revendications

1. Procédé d'enlèvement d'agents adhésifs d'une surface d'une pièce de carrosserie automobile dans la zone d'un rebord plié, le rebord plié étant formé par une tôle externe enserrant une tôle interne, entre lesquelles une couche d'adhésif est appliquée, et la zone à traiter se trouvant sur la tôle interne au-dessus du rebord plié, l'adhésif étant évaporé par un laser dans la zone à traiter.

2. Procédé selon la revendication 1, **caractérisé en ce que** les adhésifs (20) ayant une proportion élevée de résines époxydes ou une résine époxyde sont vaporisés.

3. Procédé selon l'une quelconque des revendications précédentes, **caractérisé en ce que** l'on utilise comme laser (36) un laser à dioxyde de carbone, un laser à corps solide, un laser à diodes ou analogues.

4. Procédé selon la revendication 3, **caractérisé en ce que** le laser (36) est choisi en fonction de l'adhésif à enlever (20).

5. Procédé selon l'une quelconque des revendications précédentes, **caractérisé en ce que** les vapeurs d'adhésif produites sont aspirées par un dispositif d'aspiration.

6. Procédé selon l'une quelconque des revendications précédentes, **caractérisé en ce que** le laser s'approche automatiquement de la zone (32).

7. Procédé selon l'une quelconque des revendications 1 à 5, **caractérisé en ce que** le laser s'approche manuellement de la zone (32).
